# EUROPEAN PATENT APPLICATION

(11) **EP 1 653 678 A2**
(43) Date of publication of application: **03.05.2006**
(21) Application number: 05023246.1
(22) Date of filing: 25.10.2005
(51) Int. Cl.: H04L 12/56, H04L 29/06

(54) **TCP flow controlling method in high-speed mobile communications network**

(30) Priority: 29.10.2004 KR 2004087473
(71) Applicant: LG Electronics Inc., Yongdungpo-gu Seoul (KR)
(72) Inventor: Lee, Kyung-Ju, Dukyang-Du Goyang Gyeonggi-Do (KR)
(74) Representative: von Hellfeld, Axel

(57) **Abstract**

Provided is data transmission in a mobile communications network, more particularly, a TCP (Transmission Control Protocol) flow controlling method for data transmissions in a high-speed mobile communications network in which a handoff/handover is performed, which focuses on that a mobile TCP packet can be identified using a mobile option field for the TCP packet, the method comprising determining which terminal of wired or mobile communications terminals is connected to a server, and controlling a transfer rate by adopting different congestion avoidance according to the determination.

## Description

### BACKGROUND OF THE INVENTION

### 1. Field of the Invention

The present invention relates to TCP (Transmission Control Protocol) data transmissions in a mobile communications network, and particularly, to a TCP flow controlling method for data transmissions in a high-speed mobile communications network in which a_handoff/handover is performed.

### 2. Description of the Related Art

TCP (Transmission Control Protocol) is used together with IP (Internet Protocol) to send message type data between computers on the internet. While the IP substantially controls data delivery, the TCP chases and manages data packets.

A connection method for such TCP communications network will now be described. Users of wired communications terminals such as PC (Personal Computer) generally use SLIP (Serial Line Protocol) or PPP (Point to Point Protocol) for connecting to the internet. Conversely, mobile communications terminals communicate with a server using the PPP provided from the mobile communications network. Furthermore, considering characteristics of this TCP communications network, when using the wired communications terminal for communicating with a server through a wired network, errors hardly occur and delay occurs without great fluctuation, on the contrary, when using the mobile communications terminal, errors occur very frequently and delay occurs with great fluctuation due to handover (or handoff, hereinafter refer to as 'handover') between a unstable channel circumstance and cell.

However, recently, TCP layer of a server has controlled a transfer rate of every terminals by using the same method regardless of characteristics of these wired and mobile communications terminals.

In this method for controlling the transfer rate, the TCP uses "Go back N scheme" method which waits for an acknowledgement signal ACK after transferring many packets. According to this method, a transmitting side (source) determines the transfer rate. All of the packets are transferred with respective sequence numbers included in the ACK. Whenever the ACK is received, the transmitting side records each RTT (Round Trip Time) and increases the transfer rate into a value of two times thereof. However, a transmission quantity can not exceed a buffer capacity of a receiving side (destination).

When packets are erroneously transferred due to a certain reason (e.g., loss, delay jitter, etc), the transfer rate can be regulated by the following two methods.

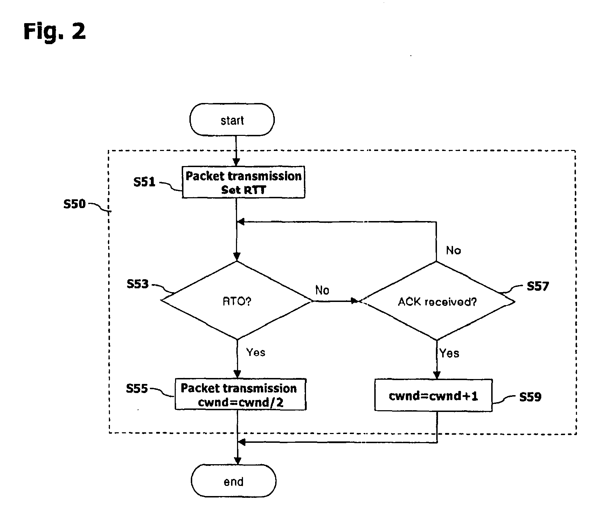

First, the transfer rate is regulated using a congestion avoidance method. Figure 2 is a flow chart for a TCP flow control according to the related art showing this congestion avoidance method. As shown in the drawing, the transmitting side transfers a packet to the receiving side and sets a timer based on the RTT of the packet (S51). The transmitting side then checks a RTO (Retransmission TimeOut) (S53). When an ACK is not received within the set time (S57), the transmitting side performs a retransmission and decreases the transfer rate into an half of the current value thereof every timeout (S55).

Second, the transfer rate is regulated using a fast retransmission method. In this method, although the timer is not expired when receiving the same ACK, the transmitting side immediately carries out the retransmission.

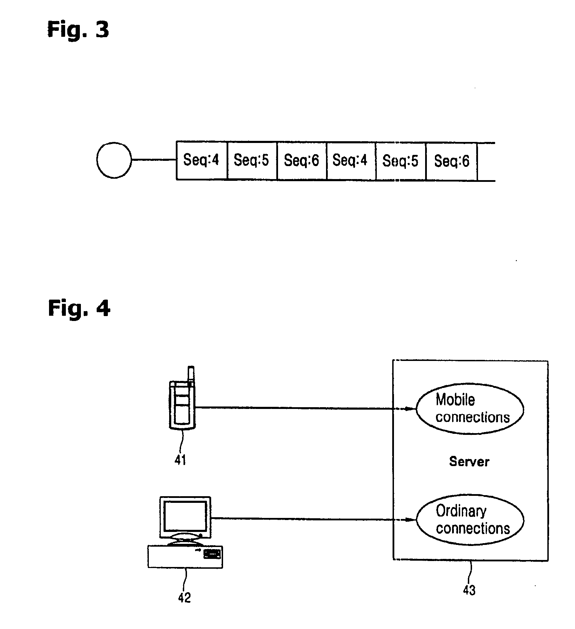

Recently, a transfer rate practically transmittable in a high-speed mobile communications network has a relatively high value in a good radio channel circumstance. However, supplemental channels for high-speed communication can not be allocated in a communication pollution area which is a handover area. As a result, when a mobile communications terminal receives data from a server, large TCP data packets can not be sent to the mobile communications terminal in the communication pollution area where the handover is performed, but piled up in queue of a base station as shown in Figure 3.

In high-speed transmission, a time that the mobile communications terminal deviates from the area where the handover is performed is longer than the timeout of the transmitting side set on the basis of the recorded RTT, which results in retransmission from the transmitting side. As a result, as shown in Figure 3, the same packets are overlapped to wait for transmission thereof.

In such related art mobile communications network, when the mobile communications terminal deviates from the communication pollution area where the handover is performed, packets which have no influence on the transfer rate are sent to the mobile communications terminal to cause consumption of radio channels and degradation of actual transfer rate of the mobile communications terminal.

### SUMMARY OF THE INVENTION

Therefore, an object of the present invention is to provide a TCP (Transmission Control Protocol) flow controlling method using different schemes by identifying a mobile communications terminal and a wired communications terminal.

To achieve these and other advantages and in accordance with the purpose of the present invention, as embodied and broadly described herein, there is provided a TCP flow controlling method comprising determining which terminal of wired or mobile communications terminals is connected to a server, and controlling a transfer rate by adopting different congestion avoidance according to the determination.

Preferably, the determination is achieved using an option field of TCP packet.

Preferably, the transfer rate is controlled by ordinary congestion avoidance when the server is connected to the wired communications terminal, while being differently controlled by mobile congestion avoidance when the server is connected to the mobile communications terminal.

Preferably, the transfer rate is controlled using first RTO (Retransmission Timeout) and second RTO which are set on the basis of RTT (Round Trip Time) measured according to high-speed transfer rate and low-speed transfer rate.

Preferably, the transfer rate is controlled by maintaining congestion window when an ACK (Acknowledgement signal) is received between the first and second RTOs.

Preferably, the transfer rate is controlled by retransmitting mobile TCP packet and reducing the size of the congestion window into an half thereof when the ACK is received after the second RTO is completely counted.

According to another embodiment of the present invention, there is provided a TCP flow controlling method comprising identifying a connection between a server and wired or mobile communications terminals, and controlling data transfer rate by adopting mobile congestion avoidance when the server is connected to the mobile communications terminal.

According to still another embodiment of the present invention, there is provided a TCP flow controlling method comprising identifying a mobile communications terminal and a wired communications terminal by using an option field of TCP packet to thereafter control a transfer rate by adopting different congestion avoidance with respect to the mobile and wired communications terminals, and controlling a transfer rate for congestion avoidance by adopting an ordinary RTO (Retransmission Timeout) together with a mobile RTO for compensating the ordinary RTO.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

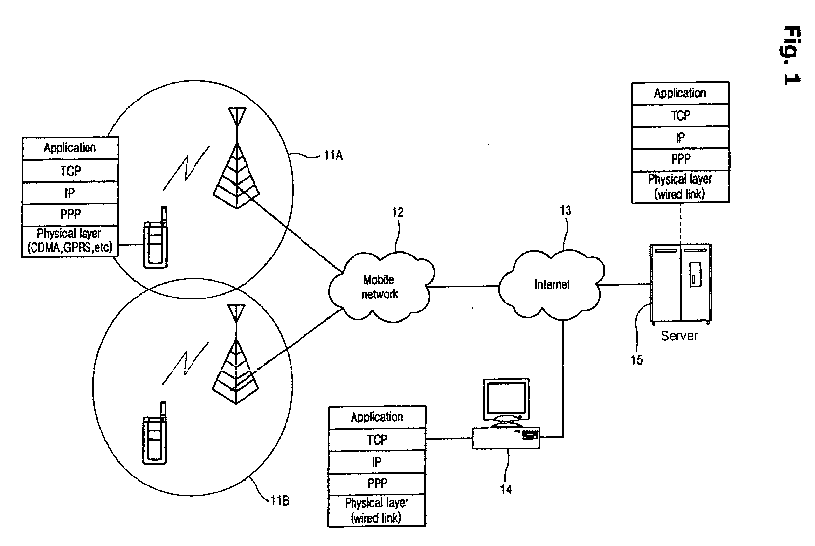

Figure 1 is a schematic diagram of a communications network according to the related art;
Figure 2 is a flow chart showing a congestion avoidance processing method according to the related art;
Figure 3 is a explanatory view of TCP packet accumulated in queue of a base station;
Figure 4 is a exemplary view for TCP connection according to the present invention;
Figure 5 is a flow chart for a TCP flow controlling method with respect to mobile congestion avoidance in a high speed mobile communications terminal according to the present invention; and
Figure 6 is a diagram for TCP packet format further having a mobile option field according to the present invention.

### DETAILED DESCRIPTION OF THE PREFERRED EMBODIMENTS

Reference will now be made in detail to the preferred embodiments of the present invention, examples of which are illustrated in the accompanying drawings.

The present invention can be embodied in a mobile communications terminal capable of performing TCP data communications. However, the present invention may further be applied to a radio communications system operated according to other specifications.

In the present invention, when error occurs during packet transmissions between a mobile communications terminal and a server, TCP flow is appropriately controlled by adopting mobile congestion avoidance, which results in prevention of consumption of radio resources while performing a handover and improvement of transfer rate. Thus, the present invention focuses on the fact that mobile TCP packets can be identified using a mobile option field for the TCP packet.

Figure 4 is an exemplary view of TCP connection according to the present invention. As shown in the drawing, TCP of a server 43 identifies a mobile communications terminal 41 and a wired communications terminal 42 to control TCP flow using different methods, respectively.

As an embodiment thereof, after identifying the mobile communications terminal 41 and the wired communications terminal 42 using the option field of the TCP packet composed of predetermined bytes (e.g., 4 bytes), different congestion avoidance control procedures for these two terminals 41 and 42 are carried out. More particularly, when controlling TCP flow between the mobile communications terminal 41 and the server 43, a control procedure with respect to mobile congestion avoidance is carried out. For this purpose, an O-RTO (Ordinary-Retransmission Timeout) and a M-RTO (Mobile Retransmission Timeout) for compensating the O-RTO have been applied to the mobile congestion avoidance control procedure.

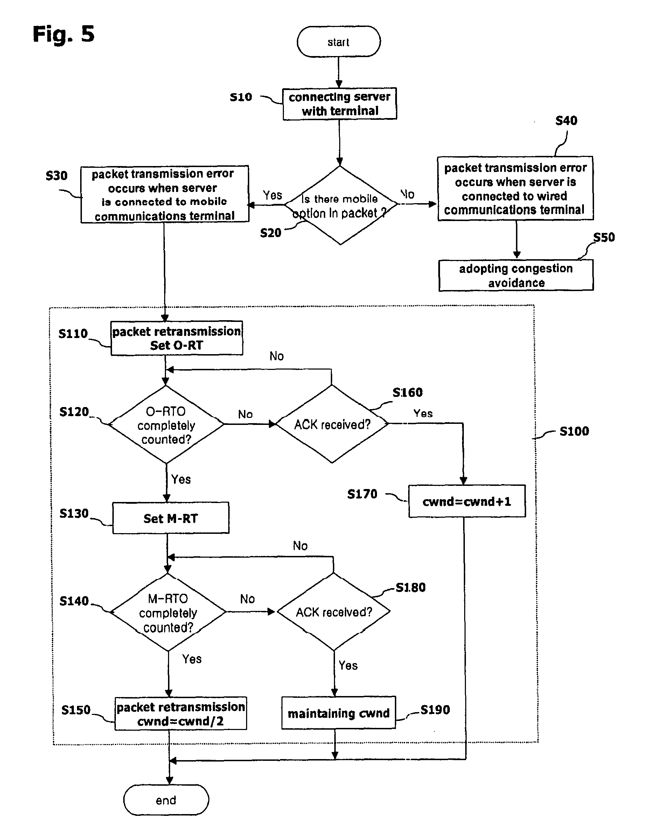

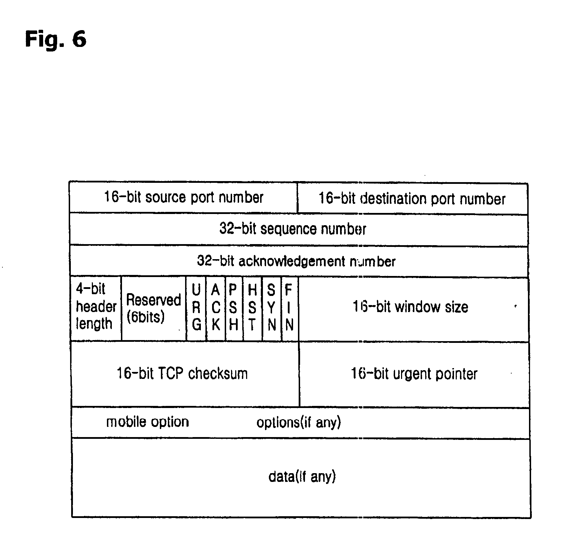

Figure 5 is a flow chart of TCP flow controlling method with respect to mobile congestion avoidance according to the present invention, and Figure 6 is a diagram of TCP packet format further having a mobile option field according to the present invention.

As illustrated in Figures 5 and 6, when a server is connected to a terminal (S10), it is identified which terminal of the mobile communications terminal or the wired communications terminal is connected to the server by using a mobile option field in TCP packet format shown in Figure 6 (S20). According to the step S20, when a certain error occurs while transmitting packets (e.g., loss, delay jitter, etc), a transfer rate can be controlled by adopting separate congestion avoidance. That is, when the server is connected to the wired communications terminal, the transfer rate can be controlled by adopting the related art congestion avoidance shown in Figure 2 (S40 and S50). On the contrary, when the server is connected to the mobile communications terminal, the transfer rate can be controlled by adopting the mobile congestion avoidance (S30 and S100).

The step S100 will now be explained in more detail. A transmitting side (a server or a mobile communications terminal) sends TCP packet to a receiving side (a mobile communications terminal or a server) and sets an 0-RT (Ordinary Retransmission Timer) (S110). An 0-RTO (Ordinary Retransmission Timeout) of the 0-RT is set to a value based on RTT as same as that in the typical method. At this time, when an ACK (Acknowledgement signal) is received from a receiving side within the set time O-RTO of the O-RT (S120 and S160), the mobile communications terminal 41 is in a state that supplemental channels for high-speed communication are allocated thereto. In order words, the mobile communications terminal 41 is connected to the server 43 so as to perform the high-speed communication. Therefore, the congestion window is increased in to two times to thereby increase the data transfer rate.

However, when the ACK signal does not reach the transmitting side within the set time O-RTO of the O-RT (S120), the mobile communications terminal 41 may be in a state of being positioned in a communication pollution area where a handover is performed, and accordingly it can be considered as the mobile communications terminal is connected to the server 43. Therefore, this state denotes that the server 43 can communicate with the mobile communications terminal 41 only at a low speed. As a result, the transmitting side does not retransmit the packet but sets a M-RT (Mobile Retransmission Timer) (S130). The timeout value M-RTO of the M-RT is set to a value based on the RTT of the delayed ACK which has not been received within the O-RTO. Thus, when the ACK signal is not received in the transmitting side within the M-RTO (S140), the data transfer rate can be controlled by retransmitting the packet and reducing the size of the congestion window cwnd into an half thereof (S150). However, when the ACK signal is received in the transmitting side between each timeout of the O-RT and the M-RT (S180), the size of the congestion window is not regulated (S190).

As illustrated above, the packet retransmission is carried out after the timeout of the M-RT (Mobile-Retransmission Timer) is completely counted, and not immediately carried out as in the typical method although the timeout of the O-RT (Ordinary-Retransmission Timer) is completely counted.

As a result, TCP flow is controlled using such aforementioned method, so that retransmission packets which substantially have no influence on the transfer rate in the mobile communications network are removed to thereby improve efficiency of the communications network. In addition, in the mobile communications network, the congestion window is maintained so as to prevent drastic decrease of transfer rate caused when the mobile communications terminal 41 moves into the handover area to thereby be converted into a low-speed transmission mode, and also to prevent slow increase of the transfer rate when the mobile communications terminal 41 moves back into the high-speed transfer rate area.

For reference, at the low-speed transfer rate, the retransmission may be delayed to degrade the transfer rate. However, a high-speed retransmission is carried out in the high-speed mobile communications network to achieve a high transfer rate, thereby preventing shortcomings.

As described so far, by removing retransmission packets which substantially have no influence on the transfer rate in the mobile communications network, efficiency of communications network is improved to substantially improve the transfer rate of the mobile communications terminal.

Furthermore, in the mobile communications network, it is advantageously to prevent drastic decrease of the transfer rate which is caused when the mobile communications terminal moves into the handover area to thereby be converted into a low-speed transmission mode in a high-speed mobile communications network, and it is also effective to prevent slow increase of the transfer rate when moving back into the high-speed transfer rate area.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A TCP (Transmission Control Protocol) flow controlling method in a high-speed mobile communications network comprising:
determining which terminal of wired or mobile communications terminals is connected to a server; and
controlling a transfer rate by adopting different congestion avoidance according to the determination.

2. The method of claim 1, wherein the determination is carried out using an option field of TCP packet.

3. The method of claim 1, wherein the transfer rate is controlled by ordinary congestion avoidance when the server is connected to the wired communications terminal, and controlled by mobile congestion avoidance when the server is connected to the mobile communications terminal.

4. The method of claim 1, wherein the transfer rate is controlled using first and second RTOs (Retransmission Timeout) set on the basis of RTT (Round Trip Time) measured according to high-speed transfer rate and low-speed transfer rate when the server is connected to the mobile communications terminal.

5. The method of claim 4, wherein the first RTO is set on the basis of the RTT measured at the high-speed transfer rate.

6. The method of claim 4, wherein the second RTO is set on the basis of the RTT measured at the low-speed transfer rate at which a handover is performed.

7. The method of claim 1, wherein the transfer rate is controlled by maintaining congestion window when an ACK (Acknowledgement signal) is received between the first RTO and the second RTO.

8. The method of claim 1, wherein the transfer rate is controlled by retransmitting a mobile TCP packet and reducing the size of the congestion window into an half thereof when the ACK is received after the second RTO is completely counted.

9. A TCP (Transmission Control Protocol) flow controlling method in a high-speed mobile communications network in which it is identified which terminal of wired or mobile communications terminals is connected to a server, and accordingly a data transfer rate is controlled by adopting mobile congestion avoidance when the server is connected to the mobile communications terminal.

10. The method of claim 9, wherein the connection is identified using an option field of TCP packet.

11. The method of claim 9, wherein the transfer rate is controlled using first and second RTOs (Retransmission Timeout) set on the basis of RTT (Round Trip Time) measured according to high-speed transfer rate and low-speed transfer rate.

12. The method of claim 9, wherein the transfer rate is controlled by maintaining congestion window when an ACK (Acknowledgement signal) is received between the first RTO and the second RTO.

13. The method of claim 9, wherein the transfer rate is controlled by retransmitting a mobile TCP packet and reducing the size of the congestion window into an half thereof when the ACK is received after the second RTO is completely counted.

14. A TCP (Transmission Control Protocol) flow controlling method in a high-speed mobile communications network comprising:
identifying wired and mobile communications terminals using an option field of TCP packet, and thereafter controlling a transfer rate by adopting different congestion avoidance with respect to the wired and mobile communications terminals; and
adopting an ordinary RTO (Retransmission Timeout) and a mobile RTO for compensating the ordinary RTO, to thereby control the transfer rate with respect to the congestion avoidance.

15. The method of claim 14, wherein the mobile RTO is set to a value based on an RTT (Round Trip Time) of a delayed acknowledgement signal which has not been received within the ordinary RTO.

16. The method of claim 14, wherein the retransmission is performed after a timeout of a mobile retransmission timer is completely counted, and is not immediately performed although a timeout of an ordinary retransmission timer is completely counted.

17. The method of claim 14, wherein in the first step, the mobile communications terminal and the wired communications terminal are identified using an option field of TCP packet when generating a connection with a server.
